# EUROPÄISCHE PATENTSCHRIFT

(11) **EP 2 457 320 B1**
(45) Veröffentlichungstag und Bekanntmachung des Hinweises auf die Patenterteilung: **09.04.2014**
(21) Anmeldenummer: 10742786.6
(22) Anmeldetag: 23.07.2010
(51) Int. Cl.: H02P 9/10, H02P 9/00, F03D 9/00, F03D 7/04, F03D 7/02

(54) **VERFAHREN ZUM BETREIBEN EINER WINDTURBINE SOWIE DAZU GEEIGNETE WINDTURBINE**
METHOD FOR OPERATING A WIND TURBINE AND WIND TURBINE SUITED THEREFOR
PROCÉDÉ DE FONCTIONNEMENT D'UNE TURBINE ÉOLIENNE ET TURBINE ÉOLIENNE ASSOCIÉE

(30) Priorität: 23.07.2009 DE 102009027981
(43) Veröffentlichungstag der Anmeldung: 30.05.2012
(73) Patentinhaber: Suzlon Energy GmbH, 18057 Rostock (DE)
(72) Erfinder: RAFOTH, Axel, 18059 Rostock (DE)
(86) Internationale Anmeldenummer: PCT/EP2010/060759
(87) Internationale Veröffentlichungsnummer: WO 2011/009958

(56) Entgegenhaltungen:
- EP-A2- 1 863 162
- WO-A2-2009/076968
- DE-A1-102006 009 127
- US-A1- 2004 264 082
- US-A1- 2009 174 186

## Beschreibung

Die vorliegende Erfindung betrifft ein Verfahren zum Betreiben einer an einem Stromnetz angeschlossenen Windturbine zur Elektroenergieerzeugung bei Auftreten einer Netzspannungsänderung sowie eine Windturbine, mit der das erfindungsgemäße Verfahren durchführbar ist.

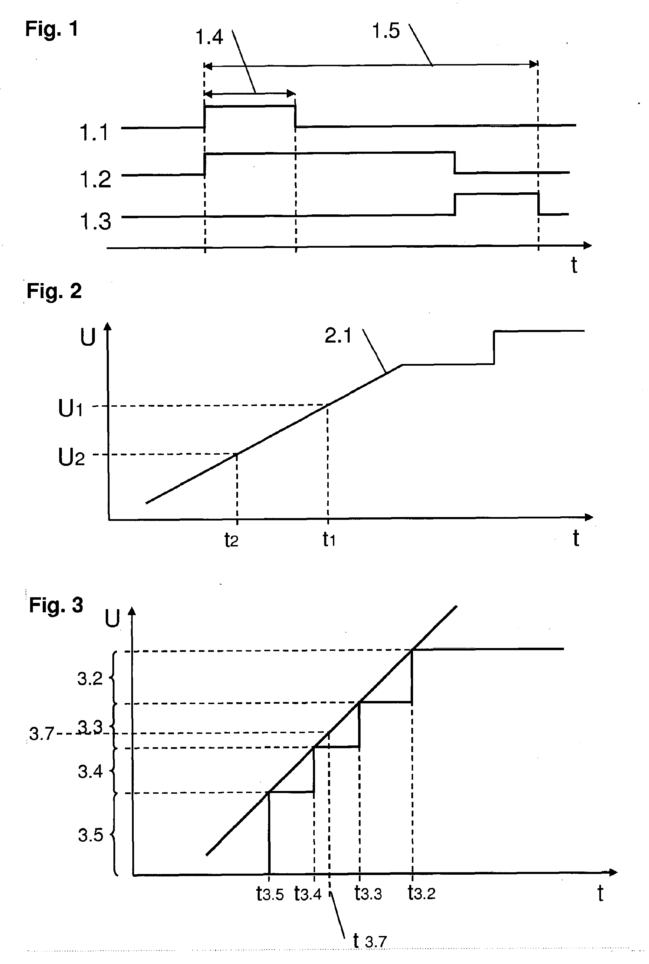

Windturbinen sind für gewöhnlich zur Einspeisung von Elektroenergie an das öffentliche Stromversorgungsnetz angeschlossen. In diesem Stromversorgungsnetz können Spannungsfehler bzw. Spannungsabweichungen wie z. B. Kurzschlüsse auftreten, die eine vorübergehende Verringerung oder auch Erhöhung der Spannung in einer oder mehreren Phasen zur Folge haben. Herkömmliche Windturbinen trennen nach Erkennung eines solchen Netzfehlers ihre Verbindung zum Netz und schalten sich selbsttätig ab. Ein solcher Abschaltvorgang herkömmlicher Windturbinen ist in Fig. 1 dargestellt, in dem Signalzustände eines Netzfehlers 1.1, eine Fehlermeldung 1.2 und eine Auslöseoperation 1.3 über der Zeit dargestellt sind. Die Signalzustände können dabei lediglich den Zustand 0 oder 1 haben. Bei Auftreten eines Netzfehlers 1.1 wird ein diesbezügliches Signal für die Dauer der Reaktionszeit 1.4 generiert. Mit Beginn des Signals über die Existenz eines Netzfehlers 1.1 wird das Signal für die Fehlermeldung 1.2 ausgelöst. Das Ende des Signals über die Fehlermeldung wiederum löst die Auslöseoperation 1.3 aus, die wiederum zum Ausschalten der Windturbine führt. Es ist ersichtlich, dass von der Erfassung des Netzfehlers 1.1 bis zur tatsächlichen Abschaltung der Windturbine eine relativ lange Ausschaltverzögerung 1.5 stattfindet.

Durch gesetzliche Vorgaben verschiedener Länder oder Regionen besteht die Anforderung an Windturbinen, bei Fehlern des Energieversorgungsnetzes die Energieproduktion aufrecht zu erhalten. Insbesondere bei einer zunehmenden Anzahl von Windturbinen im Stromversorgungsnetz ist es daher erforderlich, das Betriebsverhalten von Windturbinen dahingehend zu modifizieren, dass die Anlagen Netzfehler durchfahren und danach den Wiederaufbau des Netzes unterstützen. Zu diesem Zweck wurden von verschiedenen Ländern oder Regionen Spannungsgrenzen definiert, bei deren Unterschreitung erst die Windturbine abgeschaltet werden darf. Das heißt, dass bei Auftreten einer - Netzspannungsabweichung bzw. eines Netzfehlers in einem Bereich, der über der definierten Spannungsgrenze liegt, die Windturbine mit dem Netz verbunden bleiben soll. Die Anlage soll bei bestimmten Spannungsabfallwerten den Fehler bzw. den Zustand der Netzspannungsabweichung durchfahren soll. Dieses Durchfahren wird auch als "Low Voltage Ride Through" (LVRT) bezeichnet. Dabei wird mittels Kennlinien in Abhängigkeit vom aktuellen, vom Normalspannungsbereich abweichenden Spannungswert vorgegeben, welche Zeitdauer und/oder in welchem Betriebszustand die Windturbine weiter betrieben werden soll. Im Fall eines Einbruchs der Netzspannung verändern sich die Energieflüsse zwischen Windturbine und Netz, u. U. kann weniger oder keine Energie mehr in das Stromnetz abgeführt werden. Im Folgenden wird der Betrieb beim Durchfahren einer Variation der Netzspannung als LVRT-Betrieb bezeichnet.

Bei Netzspannungsnormalisierung innerhalb des vorgegebenen Zeitraumes soll auch die Windturbine wieder im Normalbetrieb. Falls jedoch die Netzspannungsabweichung bzw. der Netzfehler über die Dauer des vorgegebenen Zeitraumes hinweg existieren sollte, ist die Windturbine vom Netz zu trennen beziehungsweise abzuschalten.

Eine derartige Kennlinie zur Einstellung der Verweilzeit im Netz in Abhängigkeit von der jeweiligen Spannung ist in Fig. 2 dargestellt. Es ist dabei ersichtlich, dass z. B. bei einem Spannungsabfall auf die Spannung U1 durch die Kennlinie 2.1 vorgegeben ist, die Zeit t1 im LVRT-Betrieb zu durchfahren und erst bei Ablauf der Zeit t1 die Windturbine abzuschalten ist, falls sich bis dahin keine Netzspannungsnormalisierung eingestellt haben sollte. Bei Spannungsabfall auf den Wert U2 ist bereits bei einer Zeit t2 die Windturbine abzuschalten. Es ist ersichtlich, dass, je höher die verbleibende Restspannung im Netz ist, die Verweilzeit im Netz für die Windturbine umso länger ist.

Der Betrieb der Windturbine im LVRT-Betrieb dient einerseits zur Vermeidung von möglichen Belastungs- und Fehlerzuständen der Turbine, die durch den jeweiligen Spannungseinbruch erzeugt werden könnte. Zum Anderen wird aber der Betrieb der Windturbine zumindest teilweise aufrecht erhalten, um somit einen völligen Zusammenbruch des Netzes zu verhindern und einen schnellen Netzwiederaufbau ermöglichen zu können.

Eine solche Windturbine ist beispielsweise aus der Veröffentlichungschrift der US2004264082A1 bekannt, wobei die Netzspannung überwacht wird und deren Verlauf gespeichert wird.

Weiterhin offenbart die WO2009076968A2 ein Steuersystem für eine Windturbine mit einer Steuerungsschnittstelle, über welche die Windturbine kontrolliert, überwacht und SCADA-Daten empfangen und gesendet werden können. Dabei wird versucht Schwankungen in der Netzspannung zu antizipieren.

Auch in die US-Amerikanische Offenlegungschrift US2009174186A1 behandelt die Reaktion der Steuerung der Windturbine auf Schwankungen der Netzspannung.

Der vorliegenden Erfindung liegt daher eine Aufgabe zugrunde, ein Verfahren und eine Windturbine zur Durchführung des Verfahrens zur Verfügung zu stellen, mit denen in einfacher, zeit- und kostensparender Weise bei Auftreten einer Netzspannungsabweichung der Betrieb der Windturbine aufrecht erhalten werden kann, und insbesondere unter Einhaltung der vorgegebenen Leistungsabgabe und des vorgegebenen Zeitrahmens ein vollständiger Netzzusammenbruch verhindert und ein schneller Netzwiederaufbau gewährleistet werden kann.

Diese Aufgabe wird durch die Merkmale des Verfahrensanspruchs 1 gelöst.

Die restlichen, abhängigen Verfahrensansprüche definieren weitere Details des erfindungsgemäßen Verfahrens.

Erfindungsgemäß ist vorgesehen, dass für nicht vom Normal-Netzspannungsbereich umfasste Netzspannungswerte Spannungsbereiche definiert werden, wobei einem jeden definierten Spannungsbereich eine Mehrzahl von Spannungswerten und jeweils wenigstens ein erster und je Spannungsbereich, wahlweise unterschiedlicher, Faktor zur Steuerung der Windturbine zur Realisierung der von der Normalbetriebsart abweichenden Betriebsart zugeordnet wird, und in Abhängigkeit von der gemessenen Windgeschwindigkeit zur Realisierung der abweichenden Betriebsart einer der ersten Faktoren zur Steuerung der Windturbine genutzt wird.

Der Normal-Netzspannungsbereich weist eine Spannungs-Untergrenze auf, welche bei Spannungseinbrüchen üblicherweise unterschritten wird. Eine solche Netzspannungsabweichung bzw. eine Unterschreitung der Spannungs-Untergrenze soll zur Einstellung des geänderten Betriebes führen. Unter der Netzspannungsabweichung ist somit insbesondere ein Spannungseinbruch zu verstehen, d.h. ein Fehler des Energieversorgungsnetzes wie z.B. ein Kurzschluss, der eine vorübergehende oder Erhöhung Verringerung der Spannung in einer oder mehreren Phasen zu Folge hat.

Unter dem Normalbetrieb oder der Normalisierung der Netzspannung ist der Betrieb der Windturbine zu verstehen, wenn keine Abweichung der Netzspannung vom Grenz-Netzspannungsbereich auftritt. Bei Messung bzw. Erkennung einer Abweichung vom Normal-Netzspannungsbereich soll die Windturbine innerhalb einer definierten Zeitdauer in einem besonderen Betriebsmodus, insbesondere mit verminderter Leistung, betrieben werden. Geht die Spannungsabweichung zeitlich über die definierte Zeitdauer hinaus soll die Windturbine abschalten. Wird die Netzspannung innerhalb des definierten Zeitraumes wieder normalisiert, soll die Windturbine ab diesem Zeitpunkt auch wieder im Normalbetrieb weiterarbeiten. Das heißt, wenn erkannt bzw. gemessen wird, dass die Netzabweichung beendet ist, schaltet die Windturbine wieder in den Modus des Normalbetriebes zurück. Das bedeutet, dass ab Umschaltung auf Normalbetrieb ein Zeitraum des Überganges zwischen der abweichenden Betriebsart und dem Normalbetrieb bestehen wird, in dem an der Windturbine allerdings im Wesentlichen bereits alle Einstellungen zur Realisierung des Normalbetriebes vorgenommen sind.

Das Verfahren dient dem Zweck, dass eine und insbesondere mehrere erfindungsgemäß betriebene Windturbinen bei einem Netzfehler diesen im LVRT Betrieb, insbesondere in einem Modus mit verminderter Leistung durchfahren können, wobei die Windturbinen durch ihre latente vollständige Betriebsbereitschaft und/oder durch ihre latente, wenn auch verringerte Leistungsabgabe, den Wiederaufbau des Netzes unterstützen, insofern der Netzfehler innerhalb einer bestimmten, vorher gemäß geltender Bestimmungen festgelegten Zeitdauer behoben ist. Dieser Modus zum Durchfahren des Netzfehlers wird auch LVRT-Modus (Low Voltage Ride Through) genannt, wobei die Windturbine mit dem Netz verbunden bleibt. Ist der Netzfehler nicht innerhalb dieser Zeitdauer behoben, wird die Windturbine vom Netz getrennt und abgeschaltet.

Beim Auftreten eines Netzfehlers wirken mehrere Einflussgrößen auf die Windturbine, die allerdings in einem ganz bestimmten, vorgegebenen und vom Spannungsabfall abhängigen LVRT-Betrieb weiter betrieben werden soll. Diese Einflussgrößen z. B. sind die verbleibende Rest-Netzspannung, die daraus abgeleitete und vorgeschriebene Verweildauer der Windturbine am Netz sowie die herrschenden Windverhältnisse.

Die quasikontinuierliche Berechnung von geeigneten Einstellgrößen zur Realisierung des leistungsverminderten Betriebes würde entweder eine relativ lange Zeit beanspruchen, in der die Windturbine nicht den geforderten Betriebsbedingungen entspricht, oder es bedarf einer relativ hohen Rechner- bzw. Steuerungskapazität.

Im Rahmen der Erfindung wird offenbart, dass Faktoren zur Einstellung der Windturbine den aktuellen, vom Normalspannungsbereich abweichenden Bereichen zugeordnet sind. Durch den Gebrauch jeweils eines ersten Faktors als Steuerungsparameter lässt sich viel schneller auf einen Spannungseinbruch reagieren, da lediglich der Faktor, der dem Spannungsbereich zugeordnet ist, in dem sich die Rest-Netzspannung befindet, abgerufen wird und in Abhängigkeit von, z. B. unter Verrechnung mit, der Windgeschwindigkeit zur Steuerung der Windturbine eingesetzt wird.

Es kann dabei vorgesehen sein, dass die definierten Spannungsbereiche einander überlagern oder aneinander angrenzen. Vorteilhafterweise sollten sie jedoch aneinander angrenzen, da bei ihrer Überlagerung zusätzlich geeignete Kriterien zur Auswahl des jeweiligen Bereiches und damit des gültigen Faktors im Überlagerungsbereich heranzuziehen wären.

Zudem ist vorgesehen, dass Windgeschwindigkeitsbereiche definiert werden, wobei einem jeden definierten Windgeschwindigkeitsbereich eine Mehrzahl von Windgeschwindigkeiten zugeordnet werden und einem jeden Windgeschwindigkeitsbereich wenigstens ein je Windgeschwindigkeitsbereich zweiter Faktor zur Steuerung der Windturbine zur Realisierung des vom Normalbetrieb abweichenden Betriebes zugeordnet wird. Besonders bevorzugt, beeinflusst der zweite Faktor die Leistung der Windturbine.

Es ergibt sich dadurch der Vorteil, dass Faktoren zur Einstellung der Windturbine Windgeschwindigkeitsbereichen zugeordnet sind und sich viel schneller auf Spannungseinbrüche reagieren lässt, da lediglich der Faktor, der dem Windgeschwindigkeitsbereich zugeordnet ist, in dem sich die aktuelle Windgeschwindigkeit bzw. der Turbinenarbeitspunkt befindet, abgerufen wird und zur Steuerung der Windturbine eingesetzt wird.

Zur weiteren Vereinfachung und Beschleunigung der Bestimmung der Einstellwerte zur Realisierung der gewünschten Leistung ist vorgesehen, dass aus einer Verknüpfung des ersten und des zweiten Faktors ein Steuerungssollwert für den Betrieb der Windturbine erzeugt wird zur Einstellung der vom Normalbetrieb abweichenden Betriebsart. Der erste Faktor kann dabei mit dem zweiten Faktor verknüpft werden, z. B. rechnerisch.

Zur zielgerichteten Beeinflussung der aerodynamischen Leistung der Windturbine ist vorgesehen, dass der erste und/oder der zweite Faktor und/oder der Steuerungssollwert zur Beeinflussung des Blattwinkels der Rotorblätter der Windturbine dienen können.

Durch die Änderung des Blattwinkels - auch Pitchwinkel genannt - der Rotorblätter lässt sich in einfacher Weise Einfluss auf die aufgenommene aerodynamische Leistung, und damit auch auf die Rotor-Drehzahl nehmen. So kann damit ein Überdrehen der Windturbine bei Auftreten eines Spannungseinbruchs vermieden werden. Durch die Verstellung des Blattwinkels wird der Anströmwinkel der Rotorblätter derart verstellt, dass die Blätter nicht mehr optimal angeströmt werden und der Rotor langsamer dreht und/oder das Rotormoment reduziert ist, wodurch die gewünschte LVRT-Betriebsart realisiert werden kann. Aus dieser Betriebsart kann die Windturbine entweder sehr schnell wieder in die Normalbetriebsart zurückversetzt oder abgeschaltet werden.

Bei einem Spannungseinbruch wird auch eine aerodynamische Rotor-Bremsanlage der Windturbine nicht mehr mit ausreichend elektrischer Energie versorgt, so dass die Windturbine nicht mehr im Bedarfsfall abgebremst werden kann. Die Verstellung des Blattwinkels erfolgt dabei unter Umständen batteriebetrieben, das heißt zur Verstellung Blattwinkels bedarf es keiner Netzspannung, so dass auch bei einem starken Netzeinbruch der Blattwinkel autark verstellbar ist.

In einer besonders bevorzugten Ausführungsform kann der erste Faktor ein Steuerungssignal für einen Drehzahlregler bewirken oder sein, wobei der Drehzahlregler die Änderung des Blattwinkels bewirkt. Das heißt mit anderen Worten, dass wenn eine bestimmte Grenzspannung unterschritten wird, die Windturbine im LVRT-Betrieb gefahren wird und dazu bestimmte Drehzahl-Werte über die Änderung des Blattwinkels eingestellt werden. Durch je nach Betriebsmodus und Windgeschwindigkeit vorgegebene Drehzahl-Sollwerte werden erhöhte Belastungen wie z.B. Überdrehen der Anlage vermieden und gleichzeitig die Windturbine in Betrieb gehalten, um somit schneller beim Netzaufbau zur Verfügung zu stehen und um zu verhindern, dass das Netz während des Netzfehlers nicht vollständig zusammen bricht.

Zudem ist nach Anspruch 1 vorgesehen, dass der Wert des bei Netzspannungsänderung aktuellen Blattwinkels ermittelt oder abgerufen wird und aus dem ersten, und/oder vorteilhafterweise dem zweiten Faktor und/oder dem Steuerungssollwert, ein Offset-Winkelwert bestimmt wird oder ein solcher, für einen jeweiligen nicht vom Normal-Netzspannungsbereich umfassten Spannungsbereich zuvor in einem Speicher abgelegter Offset-Winkelwert aus dem Speicher abgerufen wird, der einer Steuerung der Windturbine zwecks Aufschaltung auf den aktuellen Blattwinkel zugeleitet wird und der Blattwinkel entsprechend verändert wird. Die Blattwinkel-Verstellung erfolgt somit unter Einbeziehung des aktuellen Blattwinkels bei Auftreten der Netzspannungsabweichung. Dabei kann der Offset-Winkelwert auch rechnerisch bestimmt werden.

Alternativ oder hinzukommend kann vorgesehen sein, dass ein erster Faktor und/oder ein Steuerungssollwert zur Regelung des Betriebes einer Widerstandseinheit dienen. Eine solche Wiederstandseinheit können Widerstände eines Rotors eines Asynchrongenerators mit Käfigläufer sein oder aber auch ein Widerstand in einem Gleichspannungszwischenkreis eines Rotors eines doppelt gespeisten Asynchrongenerators. Dabei kann eine Widerstandseinheit einen Schalter umfassen, insbesondere einen IGBT-Schalter, und wenigstens einen oder mehrere bestrombare Widerstände. Damit ist eine Beeinflussung des Betriebs des Generators und/oder unter Umständen eine Umwandlung von erzeugter elektrischer Energie in Wärmeenergie realisierbar. Das heißt, dass ein erster Faktor auch zur Steuerung des sogenannten Tastverhältnisses dienen kann. Das heißt, dass die Schaltdauer und/oder -frequenz des oben genannten Schalter, insbesondere des IGBT-Schalters, und folglich die Ansteuerung der Widerstandseinheit beeinflusst werden kann.

Alternativ ist es auch möglich, dass eine Verknüpfung des ersten mit dem zweiten Faktor zu einem dritten Faktor führt, der zur Regelung des IGBT-Schalters und damit des Widerstandes dient. Wenigstens einer der Faktoren und/oder der Steuerungssollwert sollten zur Einstellung der leitungselektronischen Systeme der Windturbine dienen. Gegebenenfalls ist die Verknüpfung des ersten Faktors mit dem zweiten Faktor eine rechnerische Verknüpfung.

Es ist somit insgesamt die Einstellung der leistungselektronischen Systeme der Windturbine zur Beeinflussung der Betriebsart der Windturbine realisierbar, denn so kann die Verstellung des Blattwinkels und/oder die Bestromung der Widerstandseinheit vorgenommen werden. Damit werden unzulässige Belastungs- und/oder Fehlerzustände für diese Systeme durch den Spannungseinbruch und/oder bei einer möglichen Spannungsnormalisierung vermieden.

Zur Sicherstellung, dass die abweichende Betriebsart bei Netzspannungsabweichung wenigstens die vorgeschriebene Zeitdauer durchgeführt wird, ist vorgesehen, dass die definierte Zeitdauer entsprechend des höchsten Spannungswertes eines definierten Netzspannungsbereiches definiert wird.

Wie erwähnt, wird entsprechend einer vorgegebenen Kennlinie ein Zeitfenster definiert, innerhalb dessen die Windturbine in einem LVRT-Betrieb zu betreiben ist. Erfindungsgemäß soll dabei die Zeitdauer entsprechend des größten Spannungswertes je gewähltem Bereich definiert werden.

Da die Kennlinie eine positive Steigung aufweist, ist die definierte Zeitdauer wenigstens genauso groß wie die durch die Kennlinie vorgegebene Zeitdauer für den abweichenden Betrieb.

Im Rahmen des LVRT-Betriebs der Windturbine kann alternativ oder zusätzlich zu den oben genannten Maßnahmen eine besondere Ansteuerung von Aggregaten vorgenommen werden, die nicht direkt auf die Leistungserbringung der Windturbine Einfluss haben, wie z.B. Ölpumpen, Lüfter, Antriebsmotoren für das Yawsystem, das heißt alle Hilfsmotore, die nicht direkt für die Drehzahlregelung des Rotors oder Widerstandsbestromung gebraucht werden. Insbesondere können diese Aggregate im Zuge des LVRT abgeschaltet werden. Dies dient im Wesentlichen der Betriebssicherheit der Aggregate für die Zeit nach der Netzabweichung, um das elektrische System der Windturbine vor einem undefinierten Stromimpuls zu schützen. Somit kann ergänzend kann vorgesehen sein, dass durch wenigstens einen der Faktoren und/oder durch die Steuerungssollgröße eine längere Zeit als die bestimmte Zeitdauer oder die Zeit der Netzspannungsabweichung Einfluss auf die Betriebsweise der Windturbine genommen wird.

Zur Aufrechterhaltung des Netzes bei gleichzeitiger Möglichkeit des schnellen Abschaltens der Windturbine ist vorgesehen, dass das Verfahren derart ausgestaltet ist, dass die Windturbine in der vom Normalbetrieb hinsichtlich der Leistung abweichenden Betriebsart weniger Leistung erbringt als im Normalbetrieb.

Um den Berechnungsaufwand und damit die notwendige Zeit zur Durchführung des Verfahrens zu minimieren, kann das Verfahren derart ausgeführt sein, dass ein jeweiliger erster und/oder zweiter Faktor und/oder Steuerungssollwert dem jeweiligen Spannungs- und/oder Windbereich zugeordnet definiert wird und in wenigstens einem Speicher abgelegt wird und von dort bei der dem jeweiligen Faktor und/oder Steuerungssollwert entsprechenden Spannungsabweichung zur Einstellung abgerufen wird. Das heißt, dass in dem Speicher Tabellen abgelegt sind, in denen die Faktoren zu den Bereichen wenigstens einer der Bezugsgrößen Spannung und Windgeschwindigkeit zugeordnet abgespeichert sind. Die Faktoren und/oder Steuerungssollwerte werden somit vor Auftreten einer Netzspannungsabweichung definiert und gespeichert, so dass sie bei Auftreten z.B. eines Netzfehlers zur Steuerung der Windturbine, insbesondere zur Einstellung des Blattwinkels und/oder des Betriebes der Widerstandseinheit verfügbar sind.

Die Erfindung ergänzend ist vorgesehen, dass wenigstens einer der Faktoren und/oder der Steuerungssollwert zur Auswahl und Ansteuerung von Windturbine-Aggregaten genutzt wird, die während der Zeit der Netzabweichung abgeschaltet oder ebenfalls in einem von ihrer Normalbetriebsart abweichenden Betriebsart betrieben werden. Das heißt, dass die Existenz oder die Höhe eines Faktors oder des Steuerungssollwertes bestimmt, welches Aggregat während des Netzfehlers abgeschaltet wird. Üblicherweise sind dies solche Aggregate, deren Betrieb keine direkte Einwirkung auf die Leistungserbringung hat. Derartige Aggregate sind z.B. Ölpumpen, Lüfter und Antriebsmotore zur Einstellung des Yawsystems.

Außerdem kann vorgesehen sein, dass wenigstens einer der Faktoren und/oder der Steuerungssollwert zur Steuerung der Blindleistung der Windturbine während der Netzabweichung dienen. Dabei kann die Blindleistung mittels einer Kompensationsanlage eingestellt werden. Eine solche Kompensationsanlage kann ein Kondensatorschaltschrank zur Kompensation der Blindleistung sein.

Zur Einstellung des Betriebsverhaltens der Windturbine nach Beendigung der Netzabweichung beim Übergang zurück in den Normalbetrieb kann vorgesehen sein, dass wenigstens einer der Faktoren und/oder der Steuerungssollwert zur Erstellung von Parametern des Betriebes nach Beendigung der Netzabweichung dient.

Die erstellten Parameter können dabei z.B. als Funktion vorliegen, die vorgibt, wie schnell nach Fehlerende wieder hochgefahren wird. Je nach Tiefe des Spannungsabfalls sowie der Zeit der abweichenden Betriebsart können dabei unterschiedliche Anfahrverhalten erforderlich sein.

Außerdem kann das erfindungsgemäße Verfahren derart ausgestaltet sein, dass wenigstens einer der Faktoren und/oder der Steuerungssollwert zur Erstellung von Parametern zur Einstellung von Fehlerunterdrückungszeiten dient. Die Fehlerunterdrückungszeiten dienen zur Einstellung von Reaktionsverzögerungen bestimmter, vom Netz bestromter Aggregate der Windturbine, damit diese in gewünschter bzw. erforderlicher Reihenfolge an- und/oder abschalten.

Bevorzugt ist das Verfahren dadurch ausgestaltet, dass wenigstens einer der Faktoren und/oder der Steuerungssollwert zur Erstellung einer maximalen Anzahl von Netzabweichungswiederholungen innerhalb einer zweiten definierten Zeitspanne dient, wobei bei Überschreitung der maximalen Anzahl die Windturbine abgeschaltet wird. Dazu ist die zweite definierte Zeitspanne vorher je Spannungsbereich und gegebenenfalls je Windstärke festzulegen.

Die Bereiche der Netzspannungsabweichung können in einen ersten Spannungsbereich mit größer als 90%, in einen zweiten Spannungsbereich mit 90-45%, in einen dritten Spannungsbereich mit 44-22% und in einen vierten Spannungsbereich mit 21-0% der Normal-Netzspannung eingeteilt werden. Der erste Spannungsbereich wird vorzugweise als Normalspannungsbereich interpretiert, in dem die Windturbine nicht im LVRT-Modus betrieben wird.

Es ist dabei vorgesehen, dass die bestimmte, mit der Erfassung der Netzspannungsänderung beginnende Zeitdauer der Realisierung der abweichenden Betriebsart im ersten Spannungsbereich 0 Sekunden lang ist, und im zweiten bis viertem Spannungsbereich jeweils 2,5 Sekunden lang ist.

In Abweichung von den geforderten Zeitdauern, die im zweiten Spannungsbereich 2,5 oder 2,3 s, im dritten Spannungsbereich 1,75 s und im vierten Spannungsbereich 1,12 s betragen, geht die eingestellte Zeit der abweichenden Betriebsart somit im dritten und vierten Spannungsbereich über die geforderte Zeit hinaus, was zwar zu einer verlängerten Betriebsdauer der Windturbine führt, auf der anderen Seite aber wesentlich einfachere und damit schnellere Berechnungen der Steuerungsparameter der Windturbine erlaubt.

Die Windgeschwindigkeit ist in einen ersten Windbereich mit 4-7, einen zweiten Windbereich mit 8-11, einen dritten Windbereich mit 12-14 und einen vierten Windbereich mit größer als 14 m/s einteilbar.

Bei weiterer Netzspannungsabweichung ist das Verfahren derart ausführbar, dass bei erneuter Änderung der Netzspannung innerhalb der definierten Zeitdauer auf einen Spannungswert, der nicht von dem der erstmaligen Spannungsabweichung entsprechenden Spannungsbereich umfasst ist, ein anderer erster Faktor zur Steuerung der Windturbine zur Realisierung der von der Normalbetriebsart abweichenden Betriebsart genutzt wird.

Das heißt, dass bei einem weiteren Spannungsabfall ein anderer erster Faktor generiert oder abgerufen wird als der, der gemäß dem ursprünglichen Spannungsabfall eingestellt wurde.

Das gleiche betrifft die Steuerungssollgröße sowie gegebenenfalls den zweiten Faktor, bei entsprechend lang bemessener Zeitdauer für den Betrieb in der abweichenden Betriebsart (LVRT), in der eine wiederholte Windgeschwindigkeitsmessung sinnvoll ist.

Zur Lösung der Aufgabe wird außerdem eine Windturbine, die zur Einspeisung von elektrischem Strom an ein Stromnetz anschließbar oder angeschlossen ist, zur Verfügung gestellt. Die erfindungsgemäße Windturbine umfasst folgende Einrichtungen: Wenigstens eine Netzspannungsmesseinrichtung, wenigstens eine Windgeschwindigkeitsmesseinrichtung, die gegebenenfalls auch extern angeordnet sein kann, wenigstens eine Steuerungseinrichtung, eingerichtet zur Realisierung mehrerer, vom Normalbetrieb abweichenden Betriebsarten, und wenigstens einen ersten Speicher, in dem unterschiedlichen Netzspannungsbereichen zugeordnete erste Faktoren abspeicherbar oder abgespeichert sind. Die erfindungsgemäße Windturbine ist insbesondere zur Durchführung des erfindungsgemäßen Verfahrens ausgestaltet.

Es kann dabei vorgesehen sein, dass die Windturbine außerdem einen zweiten Speicher umfasst, wobei in dem jeweiligen ersten und/oder zweiten Speicher unterschiedlichen Windgeschwindigkeitsbereichen zugeordnete zweite Faktoren abspeicherbar oder abgespeichert sind.

Zur Speicherung des aus der rechnerischen Verknüpfung des ersten oder zweiten Faktors erzeugten Steuerungssollwertes kann vorgesehen sein, dass die Windturbine einen dritten Speicher umfasst oder dass dessen erster und/oder zweiter Speicher derart ausgestaltet ist, dass die Steuerungssollwerte in ihm abspeicherbar oder abgespeichert sind.

Alternativ oder hinzukommend kann vorgesehen sein, dass die Windturbine wenigstens eine Recheneinheit umfasst, mittels derer aus dem ersten und/oder dem zweiten Faktor und/oder dem Steuerungssollwert ein Offset-Winkelwert errechenbar ist.

Zur Regelung der Wirkleistung umfasst die Windturbine wenigstens eine Widerstandseinheit, mittels derer das Betriebverhaltens der Windturbine, insbesondere des Generators, beeinflusst werden kann, wobei unter Umständen von der Windturbine erzeugte elektrische Energie in Wärmeenergie zwecks Regulierung der Wirkleistung der Windturbine umwandelbar ist. Außerdem kann die Windturbine wenigstens eine Kompensationsanlage umfassen, mittels derer die Blindleistung der Windturbine einstellbar ist.

Ergänzend wird erfindungsgemäß ein Computerprogramm zur Verfügung gestellt, das es einer Datenverarbeitungseinrichtung ermöglicht, nachdem es in Speichermittel der Datenverarbeitungseinrichtung geladen worden ist, das erfindungsgemäße Verfahren zum Betreiben einer an ein Stromnetz angeschlossenen Windturbine zur Elektroenergieerzeugung bei Auftreten einer Netzspannungsänderung durchzuführen.

Das heißt, das Computerprogramm ermöglicht wenigstens die folgenden Schritte bzw. gibt die entsprechenden Steuerungsbefehle: Messung der aktuelle Rest-Netzspannung bei Abweichung der Netzspannung von einen bestimmten Normal-Netzspannungsbereich, Messung der aktuellen Windgeschwindigkeit, Definition einer bestimmten, mit der Erfassung der Netzspannungsänderung beginnenden Zeitdauer in Abhängigkeit vom Wert der Rest-Netzspannung Betreiben der Windturbine innerhalb der definierten Zeitdauer in Abhängigkeit vom Wert der Rest-Netzspannung mit einer bestimmten, vom Normalbetrieb hinsichtlich der Wirkleistung abweichenden Betriebsart, Betreiben der Windturbine ab innerhalb der definierten Zeitdauer erfolgenden Normalisierung der Netzspannung wieder in der Normalbetriebsart oder Abschaltung der Windturbine bei Andauern der Netzspannungsabweichung während der definierten Zeitdauer am Ende der Zeitdauer, Bereitstellung von ersten und je Spannungsbereich unterschiedlichen Faktoren zur Steuerung der Windturbine zur Realisierung der von der Normalbetriebsart abweichenden Betriebsart.

Die Erfindung bezieht sich auch auf ein computerlesbares Speichermedium, auf dem ein Programm gespeichert ist, welches es einer Datenverarbeitungseinrichtung ermöglicht, nachdem es in Speichermittel der Datenverarbeitungseinrichtung geladen worden ist, das erfindungsgemäße Verfahren zum Betreiben einer an ein Stromnetz angeschlossenen Windturbine zur Erzeugung von elektrischer Energie bei Auftreten einer Netzspannungsänderung durchzuführen.

Somit ist von der Erfindung auch ein Verfahren umfasst, bei dem das erfindungsgemäß Computerprogramm aus einem elektronischen Datennetz, wie beispielsweise aus dem Internet, auf eine an das Datennetz angeschlossene Datenverarbeitungseinrichtung heruntergeladen wird.

Die Erfindung betrifft ein Verfahren zur Steuerung einer Windturbine im Falle von Netzfehlern mittels Tabellen. Die Netzfehler werden nach Vorgaben klassifiziert. Diese Klassifizierung passt zu vordefinierten Tabellen mit Betriebsparametern der Windturbine. Einige Parameter können eine Gültigkeit haben, die länger ist als die Dauer des Netzfehlers. Dies ist in der Stufenbildung an der Kennlinie begründet.

Die vorliegende Erfindung wird anhand der beiliegenden Zeichnungen erläutert. Es zeigen
- Fig. 1: das Ausschaltverhalten einer herkömmlichen Windturbine,
- Fig. 2: eine vorgegebene Kennlinie,
- Fig. 3: die vorgegebene Kennlinie mit erfindungsgemäßer Stufenbildung,
- Fig. 4: einen Signalzustand beim Betrieb einer Windturbine bei Netzspannungsabweichung und Netzspannungsnormalisierung innerhalb der von der Kennlinie definierten Zeitdauer,
- Fig. 5: Signalzustände beim Betrieb der Windturbine bei Netzspannungsabweichung und einer erst nach durch die Kennlinie definierten Zeitdauer erfolgenden Netzspannungsnormalisierung,
- Fig. 6: eine erfindungsgemäße Windturbine in schematischer Darstellung gemäß einer ersten Ausführungsform, und
- Fig. 7: eine erfindungsgemäße Windturbine in schematischer Darstellung gemäß einer zweiten Ausführungsform.

Auf die Fig. 1 und 2 ist zur Erläuterung des Standes der Technik bereits Bezug genommen worden.

In Fig. 3 entspricht die eingestellte Kennlinie 3.1 im Wesentlichen der in Fig. 2 dargestellten vorgegebenen Kennlinie 2.1. Aus Fig. 3 ist ersichtlich, dass die Spannungsachse in Bereiche 3.2 bis 3.5 unterteilt ist, wobei diesen Bereichen 3.2 bis 3.5 an der eingestellten Kennlinie 3.1 Zeiten t3.2 bis t3.5 zugeordnet sind. Fig. 3 verdeutlicht dabei den Kern der Erfindung, der darin besteht, dass bei Abfall der Netzspannung z. B. in den Spannungsbereich 3.3 nicht die Zeitdauer für den Betrieb der Windturbine in der vom Normalbetrieb abweichenden Weise vorgegeben wird, die dem genauen Restspannungswert entspricht, sondern eine Zeit t3.3, die den höchsten Wert des Spannungsbereiches 3.3 entspricht. D. h. dass z. B. bei einem Spannungsabfall auf die Restspannung 3.7 durch die Kennlinie 3.1 (bzw. Kennlinie 2.1 in Fig. 2) definiert ist, dass die Windturbine lediglich die Zeit t3.7 mit dem Netz verbunden sein soll und innerhalb dieser Zeit in einem Betriebsmodus mit verminderter Leistung betrieben werden soll. Erfindungsgemäß ist hier jedoch vorgesehen, dass nicht die konkrete Zeit t3.7 bei dem Spannungsabfall auf die Restspannung 3.7 eingehalten wird, sondern die Windturbine mit einer Zeitdauer t3.3 am Netz angeschlossen bleibt, da sich die Restspannung 3.7 innerhalb des Spannungsbereiches 3.3 befindet. Der Vorteil dieser Vorgehensweise liegt darin, dass sich zu jedem der Spannungsbereiche 3.2 bis 3.5 konkrete Faktoren zur Einstellung der Windturbine zur Realisierung des LVRT-Betriebsmodus zuordnen lassen, wobei diese Faktoren innerhalb kürzester Zeit aus Speichern abgerufen werden können und zur Steuerung der Windturbine genutzt werden können. Dabei können die den Spannungsbereichen zugeordneten Faktoren auch mit vorher Windgeschwindigkeitsbereichen zugeordneten zweiten Faktoren zugeordnet gespeichert sein, oder in einfacher Weise mit diesem bestimmt werden, um zu geeigneten Steuerungsparametern für die Windturbine innerhalb kürzester Zeit zu gelangen. Die jedem Spannungs- und/oder Windgeschwindigkeitsbereich zugeordneten ersten und zweiten Faktoren können dabei zur Steuerung des Blattwinkels der Rotorblätter, zur Einstellung der Drehzahl in Abhängigkeit der aktuellen Windgeschwindigkeit und damit zur Einstellung der aerodynamischen Leistung und/oder zur Ansteuerung einer Widerstandseinheit und/oder ebenfalls zur Beeinflussung der Wirkleistung der Windturbine genutzt werden.

Die jeweiligen, den Spannungsbereichen 3.2 bis 3.5 zugeordneten Faktoren können in Tabellen abgespeichert werden. In weiteren Tabellen werden je Spannungsbereich Abschaltdauern für Aggregate vermerkt, die während des Spannungseinbruchs abgeschaltet werden müssen. Die Anzahl der Stufen richtet sich nach der aktuellen Netzrichtlinie, nach der rechentechnischen Ausstattung der Anlage sowie nach den technischen Anordnungen und nach dem Anlageverhalten. Allgemein gilt, dass je feinstufiger die Bereichsbildung an der Kennlinie erfolgt, umso genauer können die Einstellwerte der Windturbine realisiert werden. Die Vorteile der Stufen bzw. Bereichsbildung hinsichtlich der Restspannungen und der dadurch definierten Verweilzeiten sind, dass Steuerungswerte im Wesentlichen ohne Zeitverzögerung und mit beliebiger Genauigkeit zur Verfügung stehen. Es lassen sich dadurch die bei Abschaltung von Windturbinen in herkömmlicher Weise relativ langen Schaltzeiten von ca. ¼ Sekunde wesentlich verkürzen. Bei einer weiteren Änderung der Spannung bei bereits vorhandener Netzspannungsabweichung kann durch Umschaltung auf andere Tabellenwerte reagiert werden.

Die Gültigkeit einiger Tabellenvorgaben geht aufgrund der in Fig. 3 dargestellten Stufenbildung über die Netzfehlerdauer hinaus.

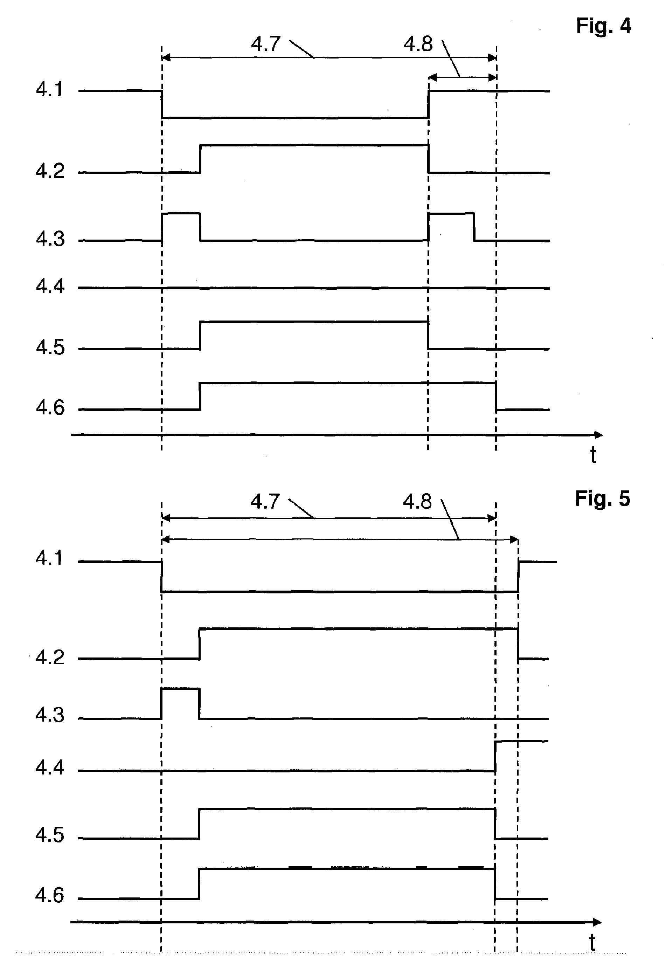

In den Fig. 4 und 5 sind Signalzustände von Messgeräten sowie daraus realisierte Steuerungssignalzustände dargestellt. Zunächst wird auf Fig. 4 Bezug genommen. In Fig. 4 ist der Netzspannungsverlauf 4.1, ein gemessener Netzspannungseinbruch 4.2, das Signal über das Vorhandensein eines elektrischen Fehlers, z. B. eines zu hohen oder zu niedrigen Stromflusses 4.3, der Ausschaltvorgang 4.4, der Betrieb mit LVRT-Betrieb 4.5 sowie die Fehlerunterdrückung 4.6 über der Zeit t dargestellt. Bei Einbruch der Netzspannung 4.1 ist ein Netzfehler beziehungsweise eine elektrischer Fehler 4.3 zu verzeichnen. Das Signal des aufgetretenen elektrischen Fehlers 4.3 korreliert mit dem gemessenen Netzspannungseinbruch 4.2. Die Erfassung des elektrischen Fehlers 4.3 bewirkt den Beginn des Status des LVRT-Betriebs 4.5. Das heißt, dass ab diesem Zeitpunkt die Windturbine in der von dem normalen Betriebsweise abweichenden Betrieb beispielsweise mit verminderter Leistung betrieben wird. Bereits beim tatsächlichen Einbruch 4.1 beginnt die von der Kennlinie vorgegebene Zeit der abweichenden Betriebsweise 4.7. Diese von der Kennlinie vorgegebene Zeit der abweichenden Betriebsweise 4.7 ist aus der Kennlinie, wie sie in Fig. 2 dargestellt ist, entnehmbar. Erfindungsgemäß wird jedoch nicht die konkrete, dem jeweiligen Spannungseinbruch zugeordnete Zeitdauer zur Realisierung der abweichenden Betriebsweise genutzt, sondern, wie zu Fig. 3 beschrieben, die Zeitdauer, die dem jeweiligen Spannungsbereich zugeordnet ist.

Es ist ersichtlich, dass die Netzspannung 4.1 nach einer gewissen Zeit 4.8 wieder Normalniveau eingenommen hat. Daraus ergibt sich die Beendigung des Signals über den gemessenen Netzspannungseinbruch 4.2. Daraus wird ebenfalls ein erneutes Signal hinsichtlich eines elektrischen Fehlers 4.3 generiert. Dadurch, dass die Netzspannung 4.1 sich innerhalb der von der Kennlinie vorgegebenen Zeit der abweichenden Betriebsweise 4.7 normalisiert hat, wird ebenfalls die abweichende Betriebsweise, der LVRT-Betrieb, 4.5 beendet, so dass die Windturbine bei Netzspannungsnormalisierung wieder im Normalbetrieb weiterbetrieben wird. Das heißt, dass in der in Fig. 4 geschilderten Situation keine Abschaltung der Windturbine realisiert werden musste, da sich die Netzspannung innerhalb der von der Kennlinie vorgegebenen Zeit der abweichenden Betriebsweise 4.7 erholte.

In Fig. 5 ist dagegen die Situation dargestellt, in der die Dauer 4.8 der Netzspannungsabweichung 4.1 über die von der Kennlinie vorgegebene Zeit der abweichenden Betriebsweise 4.7 hinausgeht. Die Signalzustandsverläufe in Fig. 5 sind dabei mit denselben Bezugszeichen wie in Fig. 4 gekennzeichnet. Auch in der in Fig. 5 beschriebenen Situation tritt ein Abfall in der Netzspannung 4.1 auf. Dies löst, wie bereits in Bezug auf Fig. 4 beschrieben, das Signal über einen elektrischen Fehler 4.3 aus, sowie das Signal zum gemessenen Netzspannungseinbruch 4.2. Es ist ersichtlich, dass sich die Netzspannung 4.1 erst nach Ablauf der von der Kennlinie vorgegebenen Zeit der abweichenden Betriebsweise 4.7 normalisiert. Bei Ablauf der von der Kennlinie vorgegeben Zeit der abweichenden Betriebsweise 4.7 wird automatisch das Signal für die Ausschaltung 4.4 gegeben. Es ist ersichtlich, dass die realisierte Zeit der abweichenden Betriebsweise 4.8 länger ist, als die von der Kennlinie vorgegebene Zeit der abweichenden Betriebsweise 4.7. Dies ist in der in Fig. 3 dargestellten Stufenbildung und den sich daraus ableitenden Zeitwerten, je Spannungsbereichen begründet. Es wird somit zwar eine längere Betriebsdauer der Windturbine bei Auftreten von Netzfehlern als von jeweiligen Gesetzgebern vorgeschrieben realisiert, jedoch hat dies den Vorteil, dass durch die in Fig. 3 dargestellte Stufenbildung an der Kennlinie die zur Steuerung der Windturbine notwendigen Daten wesentlich schneller und zuverlässiger generiert werden können, als es in einer Berechnung je konkretem Restspannungswert möglich wäre.

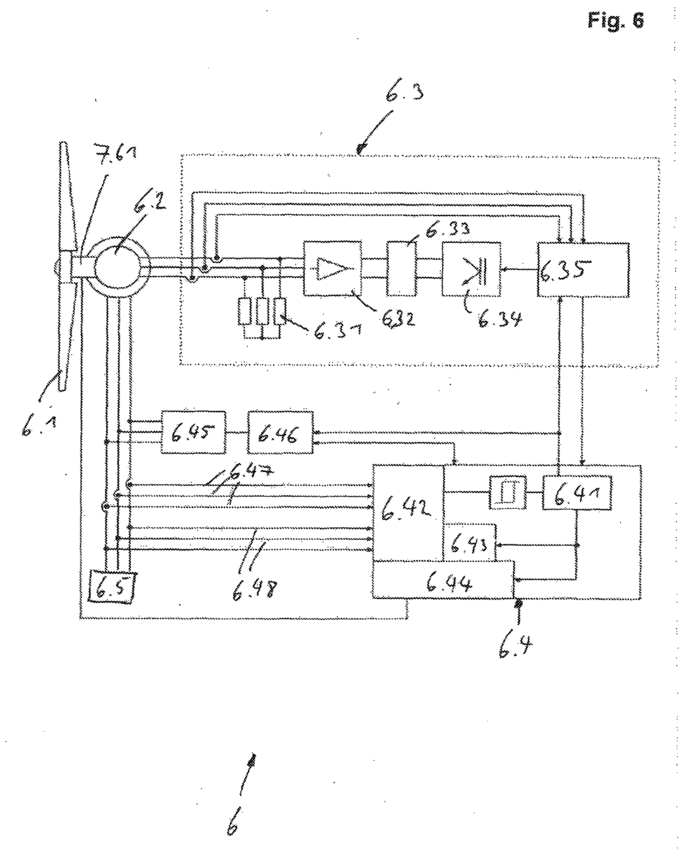

Im Folgenden wird Bezug genommen auf Fig. 6, die den konstruktiven Aufbau einer möglichen Ausführungsform einer Windturbine 6, die zur Durchführung des erfindungsgemäßen Verfahrens dienen kann, zeigt. Diese Windturbine umfasst Rotorblätter 6.1, die an einen Generator 6.2 gekoppelt sind. Der Generator 6.2 ist mit einer Energiesteuerungseinrichtung 6.3 signaltechnisch gekoppelt. Diese Energiesteuerungseinrichtung 6.3 wiederum ist mit geeigneten Signalübertragungseinrichtungen mit einem Kontrollsystem 6.4 verbunden. Die Windturbine ist an das Netz 6.5 angeschlossen, um z. B. bei Windstille oder im abgeschalteten Zustand mit Energie versorgt werden zu können.

Die Energiesteuerungseinrichtung 6.3 umfasst einen oder mehrere Widerstände 6.31, die über einen Schalter 6.34 (z. B. IGBT) verbunden sind, wobei dazwischen ein Gleichrichter 6.32 und ein Überspannungsschutz 6.33 vorteilhafter Weise vorgesehen sein können. Dieser IGBT-Schalter 6.34 ist mit einer ersten Steuereinheit 6.35 gekoppelt. Die erste Steuereinheit 6.35 ist ebenfalls mit dem Kontrollsystem 6.4 gekoppelt, welches die sogenannte LVRT-Steuerung 6.41 aufweist, an die eine Netzspannungsmesseinrichtung 6.42, sowie eine Schutzeinrichtung 6.43 und eine Blattwinkeleinrichtung 6.44 angeschlossen ist. Mit der ersten Steuereinheit 6.35 und dem Kontrollsystem 6.4 gekoppelt ist ebenfalls eine zweite Steuereinheit 6.46, welche auf ein Blindleistungselement 6.45 einwirken kann. Der Generator 6.2 ist über Strommessleitungen 6.47 und Spannungsmessleitungen 6.48 mit dem Kontrollsystem 6.4 verbunden.

Bei Auftreten einer Netzspannungsabweichung bzw. eines Netzfehlers wird zur Realisierung des Betriebes der Windturbine in der von der normalen Betriebsart abweichenden Betriebsweise über die erste Steuereinheit 6.35 der Blattwinkel der Rotorblätter 6.1 geändert, um eine gewünschte Drehzahl zu realisieren. Außerdem kann die erste Steuereinheit 6.35 den IGBT-Schalter 6.34 derart ansteuern, dass durch diesen eine Änderung in der Bestromung der Widerstände 6.31 durchgeführt wird, so dass von der Windturbine erzeugte elektrische Energie dort in Wärmeenergie umgewandelt wird und demzufolge Einfluss auf die von der Windturbine erzeugte Wirkleistung genommen wird. Alternativ kann die für Änderung der Blattwinkel der Rotorblätter 6.1 auch das Kontrollsystem 6.4 verwendet werden.

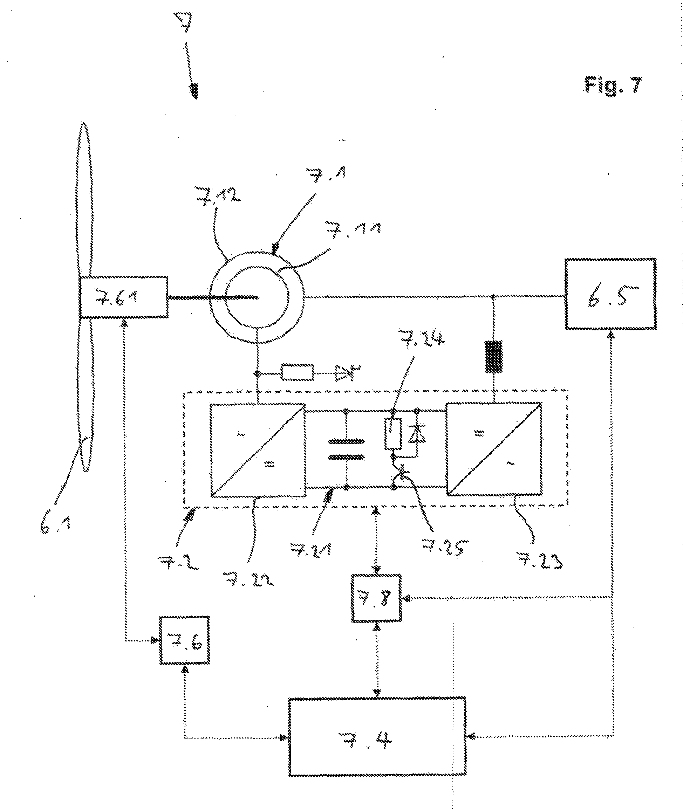

Fig. 7 führt ein weiteres Ausführungsbeispiel einer Windturbine 7 an, die zur Umsetzung des voran beschriebenen Verfahrens dienen kann. Dabei kommt ein doppelt gespeister Asynchrongenerator 7.1 zum Einsatz dessen Rotor 7.11 über ein einen Gleichspannungszwischenkreis 7.21 und zwei Umrichter 7.22, 7.23 umfassenden Umrichtersystem 7.2 mit dem Netz 6.5 elektrisch verbindbar ist. Der Stator 7.12 ist wie im vorangestellten Ausführungsbeispiel direkt mit dem Netz 6.5 verbunden. Im Zwischenkreis 7.21 des Umrichtersystems 7.2 ist ein Widerstand 7.24 mit einem Schalter 7.25 angeordnet.

Es ist eine Drehzahlsteuerung und -regelung 7.6 zur Ansteuerung des Blattwinkelverstellsystems 7.61 und eine Invertersteuerung 7.8 zur Ansteuerung des Umrichtersystems 7.2 vorgesehen, welche wiederum mit dem Kontrollsystem 7.4 der Windturbine 7 in Verbindung stehen. das Kontrollsystem 7.4 misst die Netzspannung. In Fig. 7 nicht dargestellte Elemente des Kontrollsystem 7.4. sind zum Teil aus dem vorherigen Ausführungsbeispiel mit einzubeziehen. Im Folgenden werden Beispiele für abgespeicherte, in Tabellenform hinterlegte und den Spannungsbereichen zugeordnete Einstellwerte angegeben:

**Tabelle 1: Beispiele für die sich aus der vorgegebenen Kennlinie ergebende Fehlerunterdrückungsdauer;**

| Bereich | Spannung [%] | Zeitdauer (max.) | Zeitdauer (vorzugweise) |
|---|---|---|---|
| 1 | > 90% | 0 (kein LVRT) | |
| 2 | 90-45% | 2,5 s | 2,3 s |
| 3 | 45-22% | 1,75 s | |
| 4 | 22-0% | 1,12 s | |

**Tabelle 2: Beispiele für die sich aus gewünschten Fehlerunterdrückungsverhalten je Spannungsabfall ergebenden Gültigkeitsdauer der folgenden Tabellen;**

| Bereich | Spannung [%] | Zeitdauer (max.) |
|---|---|---|
| 1 | > 90% | 0 (kein LVRT) |
| 2 | 90-45% | 2,5 s |
| 3 | 45-22% | 2,5 s |
| 4 | 22-0% | 2, 5 s |

**Tabelle 3: Beispiele für Drehzahlsollwerte des Generators in Umdrehungen pro Minute, wobei die erste Zahl die Drehzahl für eine Netzfrequenz von 50Hz angibt, und die zweite Zahl die Drehzahl für eine Netzfrequenz von 60Hz angibt, je nachdem in welches Land bzw. in welches Netz geliefert werden soll;**

| Bereichs | Spannung [%] | Windbereich 1 4 - 7 m/s | Windbereich 2 8 - 11 m/s | Windbereich 3 12 - 14 m/s | Windbereich 4 > 14 m/s |
|---|---|---|---|---|---|
| 1 | > 90% | 1560 / 1872 | 1560 / 1872 | 1560 / 1872 | 1560 / 1872 |
| 2 | 90-45% | 1590 / 1908 | 1590 / 1908 | 1590 / 1908 | 1590 / 1908 |
| 3 | 45-22% | 1590 / 1908 | 1590 / 1908 | 1650 / 1980 | 1650 / 1980 |
| 4 | 22-0% | 1590 / 1908 | 1650 / 1980 | 1650 / 1980 | 1650 / 1980 |

**Tabelle 4: Beispiele für Drehzahlsollwerte des Generators in Prozent hinsichtlich der Nenndrehzahl;**

| Bereich | Spannung [%] | Windbereich 1 4 - 7 m/s | Windbereich 2 8 - 11 m/s | Windbereich 3 12-14 m/s | Wandbereich 4 > 14 m/s |
|---|---|---|---|---|---|
| 1 | > 90% | 100% | 100% | 100% | 100% |
| 2 | 90-45% | 102% | 102% | 102% | 102% |
| 3 | 45-22% | 102% | 102% | 106% | 106% |
| 4 | 22-0% | 102% | 106% | 106% | 106% |

**Tabelle 5: Ein erstes, bevorzugtes Beispiel für Blattwinkel (Pitch)- Offsetwerte (in Grad);**

| Bereich | Spannung [%] | Windbereich 1 4 - 7 m/s | Windbereich 2 8 - 11 m/s | Windbereich 3 12-14 m/s | Windbereich 4 > 14 m/s |
|---|---|---|---|---|---|
| 1 | > 90% | 0 | 0 | 0 | 0 |
| 2 | 90-45% | 0 | 0 | 0 | 0 |
| 3 | 45-22% | 0 | 0 | 0 | 2 |
| 4 | 22-0% | 0 | 0 | 2 | 2 |

**Tabelle 6: Ein zweites Beispiel für Blattwinkel (Pitch)- Offset werte (in Grad)**

| Bereich | Spannung [%] | Windbereich 1 4 - 7 m/s | Windbereich 2 8 - 11 m/s | Windbereich 3 12 - 14 m/s | Windbereich 4 > 14 m/s |
|---|---|---|---|---|---|
| 1 | > 90% | 0 | 0 | 0 | 0 |
| 2 | 90-45% | 0 | 0 | 0 | 0 |
| 3 | 45-22% | 0 | 0 | 3 | 0 |
| 4 | 22-0% | 0 | 0 | 3 | 0 |

**Tabelle 7: Beispiele für ein etwaiges, günstiges Tastverhältnis, d. h. für die Ansteuerung des IGBT, wobei in jeder Spalte eines Windbereichs generelle Richtwerte (links) und besonders günstige Werte (rechts) angegeben sind.**

| Bereich | Spannung [%] | Windbereich 1 4 - 7 m/s | | Windbereich 2 8 - 11 m/s | | Windbereich 3 12 - 14 m/s | | Windbereich 4 > 14 m/s | |
|---|---|---|---|---|---|---|---|---|---|
| 1 | > 90% | 1 | 1 | 1 | 1 | 1 | 1 | 1 | 1 |
| 2 | 90-45% | 0,3 | 0,34 | 0,6 | 0,6 | 0,7 | 0,7 | 0,7 | 0,7 |
| 3 | 45-22% | 0,4 | 0,39 | 0,6 | 0,63 | 0,8 | 0,76 | 0,8 | 0,76 |
| 4 | 22-0% | 0,4 | 0,39 | 0,6 | 0,63 | 0,8 | 0,75 | 0,8 | 0,075 |

Die in den beschriebenen Ausführungsbeispielen offenbarten Merkmalskombinationen sollen nicht limitierend auf die Erfindung wirken, vielmehr sind auch die Merkmale der unterschiedlichen Ausführungen miteinander

**Bezugszeichenliste**

| | | | |
|---|---|---|---|
| 1.1 | Netzfehler | 6.32 | Gleichrichter |
| 1.2 | Fehlermeldung | 6.33 | Überspannungsschutz |
| 1.3 | Auslöseoperation | 6.34 | Schalter |
| 1.4 | Reaktionszeit | 6.35 | Erste Steuereinheit |
| 1.5 | Ausschaltverzögerung | 6.4 | Kontrollsystem |
| 2.1 | vorgegebene Kennlinie | 6.41 | LVRT-Steuerung |
| 3.1 | eingestellte Kennlinie | 6.42 | Netzspannungsmesseinrichtung |
| 3.2 | Erster Spannungsbereich | 6.43 | Schutzeinrichtung |
| 3.3 | Zweiter Spannungsbereich | 6.44 | Blattwinkelkontrolleinrichtung |
| 3.4 | Dritter Spannungsbereich | 6.45 | Blindleistungselement |
| 3.5 | Vierter Spannungsbereich | 6.46 | Zweite Steuereinheit |
| 3.7 | Restspannung | 6.47 | Strommessleitung |
| 4.1 | Netzspannung | 6.48 | Spannungsmessleitung |
| 4.2 | Gemessener Spannungseinbruch | 6.5 | Netz |
| 4.3 | Netzfehler | 7 | Windturbine |
| 4.4 | Ausschaltvorgang | 7.1 | Asynchrongenerator |
| 4.5 | Status der abweichenden Betriebsweise | 7.11 | Rotor |
| | | 7.12 | Stator |
| 4.6 | Fehlerunterdrückung | 7.2 | Umrichtersystem |
| 4.7 | von Kennlinie vorgegebene Zeit der abweichenden Betriebsweise | 7.21 | Gleichspannungszwischenkreis |
| | | 7.22 | Umrichter |
| 4.8 | realisierte Zeit der abweichenden Betriebsweise | 7.23 | Umrichter |
| | | 7.24 | Widerstand |
| 6 | Windturbine | 7.25 | Schalter |
| 6.1 | Rotorblatt | 7.4 | Kontrollsystem |
| 6.2 | Generator | 7.6 | Drehzahlsteuerung und -regelung |
| 6.3 | Energiesteuerungseinrichtung | 7.61 | Blattwinkelverstellsystem |
| 6.31 | Widerstand | 7.8 | Invertersteuerung |

## Patentansprüche

1. Verfahren zum Betreiben einer an ein Stromnetz (6.5) angeschlossenen Windturbine (6; 7) zur Erzeugung von elektrischer Energie bei Auftreten einer Netzspannungsänderung, wobei
- bei Abweichung einer Netzspannung (4.1) von einen bestimmten Normal-Netzspannungsbereich die aktuelle Rest-Netzspannung (3.7) gemessen wird,
- die aktuelle Windgeschwindigkeit gemessen wird,
- in Abhängigkeit vom Wert der Rest-Netzspannung (3.7) eine bestimmte, mit der Erfassung der Netzspannungsänderung beginnende Zeitdauer definiert wird,
- die Windturbine (6; 7) innerhalb der definierten Zeitdauer in Abhängigkeit vom Wert der Rest-Netzspannung (3.7) mit einer bestimmten, vom Normalbetrieb abweichenden Betriebsart betrieben wird,
- die Windturbine (6; 7) ab innerhalb der definierten Zeitdauer erfolgenden Normalisierung der Netzspannung (4.1) wieder in der Normalbetriebsart betrieben wird oder bei Andauern der Netzspannungsabweichung während der definierten Zeitdauer am Ende der Zeitdauer abgeschaltet wird,
- wobei für nicht vom Normal-Netzspannungsbereich umfasste Netzspannungswerte Spannungsbereiche (3.2, 3.3, 3.4, 3.5) definiert werden,
**dadurch gekennzeichnet, dass**
- einem jeden definierten Spannungsbereich (3.2, 3.3, 3.4, 3.5) eine Mehrzahl von Spannungswerten und jeweils wenigstens ein erster und je Spannungsbereich (3.2, 3.3, 3.4, 3.5), insbesondere unterschiedlicher, Faktor zur Steuerung der Windturbine (6; 7) zur Realisierung der von der Normalbetriebsart abweichenden Betriebsart zugeordnet werden,
- und in Abhängigkeit von der gemessenen Windgeschwindigkeit zur Realisierung der abweichenden Betriebsart einer der ersten Faktoren zur Steuerung der Windturbine (6; 7) genutzt wird,
- wobei der erste Faktor zur Einstellung des Blattwinkels der Rotorblätter (6.1) der Windturbine (6; 7) dient,
- und wobei der Wert des bei Netzspannungsänderung aktuellen Blattwinkels ermittelt oder abgerufen wird,
- und aus dem ersten Faktor ein Offset-Winkelwert bestimmt wird, oder ein solcher, für einen jeweiligen nicht vom Normal-Netzspannungsbereich umfassten Spannungsbereich (3.2, 3.3, 3.4, 3.5) zuvor in einem Speicher abgelegter Offset-Winkelwert aus dem Speicher abgerufen wird,
- und der Offset-Winkelwert einer Steuerung der Windturbine (6; 7) zwecks Aufschaltung auf den aktuellen Blattwinkel zugeleitet wird und der Blattwinkel entsprechend verändert wird.

2. Verfahren nach wenigstens einem der Ansprüche 1, **dadurch gekennzeichnet, dass** Windgeschwindigkeitsbereiche definiert werden, wobei einem jeden definierten Windgeschwindigkeitsbereich eine Mehrzahl von Windgeschwindigkeiten zugeordnet werden und einem jeden Windgeschwindigkeitsbereich wenigstens ein je Windgeschwindigkeitsbereich zweiter Faktor zur Steuerung der Windturbine (6; 7) zur Realisierung des vom Normalbetrieb abweichenden Betriebes zugeordnet wird.

3. Verfahren nach Anspruch 2, **dadurch gekennzeichnet, dass** aus einer Verknüpfung des ersten und des zweiten Faktors ein Steuerungssollwert für den Betrieb der Windturbine (6; 7) erzeugt wird zur Einstellung der vom Normalbetrieb abweichenden Betriebsart.

4. Verfahren nach wenigstens einem der vorhergehenden Ansprüche, **dadurch gekennzeichnet, dass** auch der zweite Faktor und/oder der Steuerungssollwert zur Einstellung des Blattwinkels der Rotorblätter (6.1) der Windturbine (6; 7) dient.

5. Verfahren nach Anspruch 4, **dadurch gekennzeichnet, dass** der Wert des bei Netzspannungsänderung aktuellen Blattwinkels ermittelt oder abgerufen wird und auch aus dem zweiten Faktor und/oder dem Steuerungssollwert der Offset-Winkelwert bestimmt wird, oder dieser, für einen jeweiligen nicht vom Normal-Netzspannungsbereich umfassten Spannungsbereich (3.2, 3.3, 3.4, 3.5) zuvor in dem Speicher abgelegter Offset-Winkelwert aus dem Speicher abgerufen wird, welcher der Steuerung der Windturbine (6; 7) zwecks Aufschaltung auf den aktuellen Blattwinkel zugeleitet wird und der Blattwinkel entsprechend verändert wird.

6. Verfahren nach wenigstens einem der vorhergehenden Ansprüche, **dadurch gekennzeichnet, dass** der erste Faktor und/oder der Steuerungssollwert zur Regelung des Betriebes einer Widerstandseinheit (6.31, 6.33, 6.34; 7.24, 7.25) dient.

7. Verfahren nach wenigstens einem der vorhergehenden Ansprüche, **dadurch gekennzeichnet, dass** die definierte Zeitdauer entsprechend des höchsten Spannungswertes eines definierten Netzspannungsbereiches definiert wird.

8. Verfahren nach wenigstens einem der vorhergehenden Ansprüche, **dadurch gekennzeichnet, dass** ein jeweiliger erster und/oder zweiter Faktor und/oder Steuerungssollwert dem jeweiligen Spannungs- und/oder Windbereich zugeordnet definiert wird und in wenigstens einem Speicher abgelegt wird und von dort bei der dem jeweiligen Faktor und/oder Steuerungssollwert entsprechenden Spannungsabweichung abgerufen wird.

9. Verfahren nach wenigstens einem der vorhergehenden Ansprüche, **dadurch gekennzeichnet, dass** wenigstens einer der Faktoren und/oder der Steuerungssollwert genutzt wird zur Auswahl und Ansteuerung von Windturbine-Aggregaten, die während der Zeit der Netzabweichung abgeschaltet oder ebenfalls in einem von ihrer Normalbetriebsart abweichenden Betriebsart betrieben werden.

10. Verfahren nach wenigstens einem der vorhergehenden Ansprüche, **dadurch gekennzeichnet, dass** wenigstens einer der Faktoren und/oder der Steuerungssollwert zur Steuerung der Blindleistung der Windturbine (6; 7) während der Netzabweichung dient.

11. Verfahren nach wenigstens einem der vorhergehenden Ansprüche, **dadurch gekennzeichnet, dass** bei erneuter Änderung der Netzspannung innerhalb der definierten Zeitdauer auf einen Spannungswert, der nicht von dem der erstmaligen Spannungsabweichung entsprechenden Spannungsbereich umfasst ist, ein anderer erster Faktor zur Steuerung der Windturbine (6; 7) zur Realisierung der von der Normalbetriebsart abweichenden Betriebsart genutzt wird.

## Claims

1. A method for operating a wind turbine (6; 7) connected to a power grid (6.5) for generating electric energy when a change in the grid voltage occurs, comprising
- measuring the current residual grid voltage (3.7) when a deviation of a grid voltage from a certain regular grid voltage range occurs,
- measuring the current wind speed,
- defining a certain time period starting with the detection of the change in the grid voltage, depending on the value of the residual grid voltage (3.7),
- operating the wind turbine (6; 7) within the defined time period, depending on the value of the residual grid voltage (3.7), in a certain operation mode that deviates from a regular operation,
- operating the wind turbine (6; 7) again in the regular operation mode after the grid voltage (4.1) has been normalized within the defined time period, or shutting off the wind turbine (6; 7) at the end of the time period if the deviation of the grid voltage persists during the defined time period,
- whereas voltage ranges (3.2, 3.3, 3.4, 3.5) are defined for grid voltage values that are not included in the regular grid voltage range
**characterized in that**,
- a plurality of voltage values and at least one first factor for controlling the wind turbine (6; 7), which is especially different for each voltage range (3.2, 3.3, 3.4, 3.5), are attributed to each defined voltage range (3.2, 3.3, 3.4, 3.5), so as to realize the operation mode deviating from the regular operation mode,
- and depending on the measured wind speed, one of the first factors for controlling the wind turbine (6; 7) is used to realize the deviating operation mode,
- whereas the first factor is used for adjusting the blade angles of the rotor blades of the wind turbine (6; 7)
- and whereas the value of the current blade angle during net voltage change is determined or attributed,
- and an offset angle value is determined from the first factor, or such an offset angle value from the memory, for a particular voltage range not included in the normal net voltage range (3.2, 3.3, 3.4, 3.5), is attributed from the memory where it was stored before,
- and the offset angle value of the control of the wind turbine (6; 7) is fed to the current blade angle for the purpose of intrusion and the blade angle is changed respectively

2. A method according to at least one of claim 1, **characterized in that** wind speed ranges are defined, wherein a plurality of wind speeds are attributed to each defined wind speed range and at least one second factor for controlling the wind turbine (6; 7) is attributed to each wind speed range so as to realize the operation that deviates from the regular operation.

3. A method according to claim 2, **characterized in that** a control desired value for the operation of the wind turbine (6; 7) is generated from the combination of the first and second factors so as to adjust the operation mode that deviates from the regular operation.

4. A method according to at least one of the proceeding claims, **characterized in that** also the second factor and/or the control desired value is used to adjust the blade angle of the rotor blade (6.1) of the wind turbine (6; 7).

5. A method according to claim 4, **characterized in that** the value of the current blade angle upon a change in the grid voltage is obtained or called and the offset angle value is also determined from second factor and/or the control desired value, or this offset angle value, which is previously stored in the memory for a respective voltage range (3.2, 3.3, 3.4 ,3.5) not included in the regular grid voltage range, is called from the memory, which will be fed to the controller of the wind turbine (6; 7) for the purpose of intrusion on the current blade angle, and the blade angle is correspondingly changed.

6. A method according to at least one of the proceeding claims, **characterized in that** the first factor and/or the control desired value is used to regulate the operation of a resistance unit (6.31, 6.33, 6.34; 7.24, 7.25).

7. A method according to at least one of the proceeding claims, **characterized in that** the defined time period is defined according to the highest voltage value of a defined grid voltage range.

8. A method according to at least one of the proceeding claims, **characterized in that** a respective first and/or second factor and/or control desired value attributed to the respective voltage range and/or wind range is defined and stored in at least one memory and is called therefrom when the deviation of the voltage corresponding to the respective factor and/or control desired value occurs.

9. A method according to at least one of the proceeding claims, **characterized in that** at least one of the factors and/or the control desired value is used for the selection and trigger of wind turbine apparatuses, which are shut off during the time of the deviation of the grid or operated in an operation mode which deviates from its regular operation mode.

10. A method according to at least one of the proceeding claims, **characterized in that** at least one of the factors and/or the control desired value is used to control the idle power of the wind turbine (6; 7) during the deviation of the grid.

11. A method according to at least one of the proceeding claims, **characterized in that** when a new change of the grid voltage to a voltage value, which is not included in the voltage range corresponding to the initial deviation of the voltage, occurs within the defined time period, another first factor for controlling the wind turbine (6; 7) will be used to realize the operation mode which deviates from the regular operation mode.

## Revendications

1. Méthode de fonctionnement d'une éolienne (6;7), connectée au réseau électrique (6.5) pour produire de l'électricité, lorsqu'un changement de tension du réseau électrique se produit, comprenant
a. La mesure instantanée de la tension résiduelle du réseau électrique (3.7) lorsque la tension du réseau varie d'un intervalle standard donné,
b. La mesure instantanée de la vitesse de vent,
c. L'identification de la période de temps commençant au moment de la détection du changement de la tension du réseau électrique, en fonction de la valeur de la tension résiduelle du réseau électrique (3.7)
d. Le fonctionnement de l'éolienne (6;7) sur une période de temps donné, en fonction de la valeur de la tension résiduelle du réseau électrique (3.7), pour un mode de fonctionnement qui dévie de l'exploitation normale.
e. Le fonctionnement de l'éolienne (6;7) à nouveau dans un mode de fonctionnement normal après que la tension du réseau se soit normalisée sur une période de temps définie, ou bien l'arrêt de l'éolienne (6;7) à la fin de la période où la déviation de la tension du réseau électrique a persistée sur la période de temps définie,
f. Où les intervalles de tension (3.2, 3.3, 3.4, 3.5) sont définis pour les valeurs de tension du réseau électrique, qui ne sont pas comprises dans les intervalles normaux de tension du réseau électrique.
**Caractérisée en ce que**
- Une multitude de valeurs de tension et au moins un premier paramètre de contrôle de l'éolienne (6; 7), étant spécifiquement différent pour chaque intervalle de tension (3.2, 3.3, 3.4, 3.5), soient attribués à chaque intervalle de tension défini (3.2, 3.3, 3.4, 3.5), de manière a reproduire le mode de fonctionnement déviant du mode de fonctionnement normal,
- Et qu'en fonction de la vitesse de vent mesuré, l'un des premiers paramètres de contrôle de l'éolienne (6;7) soit utilisé pour reproduire le mode de fonctionnement déviant.
- où le premier paramètre est utilisé pour ajuster l'angle des pales du rotor de l'éolienne (6 ; 7)
- Et où la valeur instantanée de l'angle des pales pendant un changement de la tension nette est identifiée ou attribuée.
- Et qu'une valeur de décalage de l'angle soit déterminée à partir du premier paramètre, ou qu'une valeur de décalage de l'angle en mémoire, pour un intervalle de tension spécifique qui ne fait pas partie des intervalles normaux de tensions électriques nettes (3.2, 3.3, 3.4, 3.5), soit attribuée de la mémoire à l'endroit où cette valeur était précédemment stockée.
- Et que la valeur de décalage de l'angle utilisée dans le contrôle de l'éolienne (6 ; 7) est forcée sur de l'angle réel instantané des pales et l'angle des pales est ajusté de manière respective.

2. Une méthode selon laquelle au moins une condition de la revendication 1 est remplie, **caractérisée par le fait que** les intervalles de vitesse de vent sont définis, dans lesquels une multitude de vitesses de vent sont attribuées à chaque intervalle de vent définit et au moins associé à un second paramètre de contrôle de l'éolienne (6; 7), lui-même attribué à chaque intervalle de vitesse de vent afin de reproduire le mode de fonctionnement déviant du mode de fonctionnement normal.

3. Une méthode selon la revendication 2, **caractérisée en ce qu'**une valeur de consigne de commande pour faire fonctionner l'éolienne (6, 7) est générée à partir de la combinaison des premiers et des seconds paramètres de manière à ajuster le mode de fonctionnement déviant du fonctionnement normal.

4. Une méthode selon l'une quelconque ou plusieurs des revendications précédentes, **caractérisée en ce que** le deuxième paramètre et / ou la valeur de consigne de commande soient aussi utilisés pour ajuster l'angle des pales du rotor (6.1) de la turbine éolienne (6 ; 7).

5. Une méthode selon la revendication 4, **caractérisée en ce que** la valeur instantanée de l'angle des pales, lors d'un changement de la tension du réseau électrique, soit déterminée ou récupérée et que la valeur de décalage de l'angle soit aussi déterminée à partir du deuxième paramètre et / ou de la valeur de la consigne de commande, ou de cette valeur de décalage de l'angle prédéfinie, préalablement stockée dans la mémoire pour un intervalle de tension donné ( 3.2, 3.3, 3.4, 3.5) situé en dehors de l'intervalle normal de tensions du réseau électrique, soit récupérée de la mémoire et entrée dans le dispositif de commande de l'éolienne (6, 7) dans le but de forcer la valeur instantanée de l'angle des pales, et d'ajuster instantanément l'angle des pales.

6. Une méthode selon l'une quelconque ou plusieurs des revendications précédentes, **caractérisée en ce que** le premier paramètre et / ou la valeur de consigne de commande soient utilisés pour réguler le fonctionnement d'une résistance de puissance (6,31, 6,33, 6,34, 7,24, 7,25).

7. Une méthode selon l'une quelconque ou plusieurs des revendications précédentes, **caractérisée en ce que** la période de temps donnée est définie en fonction de la valeur de tension la plus élevée d'un intervalle de tension du réseau électrique.

8. Une méthode selon l'une quelconque ou plusieurs des revendications précédentes, **caractérisée en ce qu'**un premier et / ou second paramètre associé et / ou une valeur de consigne de commande attribué à l'intervalle de temps associé et / ou l'intervalle de vitesse de vent soient définis et au moins stockés en mémoire informatique et rappelé lorsque la déviation de la tension correspondante au paramètre associe et / ou la valeur de consigne de commande se produit.

9. Une méthode selon l'une quelconque ou plusieurs des revendications précédentes, **caractérisée en ce que** au moins l'un des paramètres et / ou la valeur de consigne de commande soient utilisés pour la sélection et le déclenchement des appareils de la turbine éolienne, qui sont éteints pendant le temps de la déviation de la tension réseau ou qui fonctionnent dans un mode de fonctionnement déviant de son mode de fonctionnement normal.

10. Une méthode selon l'une quelconque ou plusieurs des revendications précédentes, **caractérisée en ce que** au moins l'un des paramètres et / ou la valeur de consigne de commande soient utilisés pour commander la puissance au ralenti de la turbine éolienne (6, 7) lors de la déviation de tension du réseau.

11. Une méthode selon l'une quelconque ou plusieurs des revendications précédentes, **caractérisée en ce que** lors d'un nouveau changement de la tension du réseau à une valeur de tension, qui n'est pas comprise dans l'intervalle de tension correspondant à la déviation initiale de la tension, se produit dans un intervalle de temps définit, un autre premier paramètres de commande de l'éolienne (6, 7) sera utilisé pour reproduire le mode de fonctionnement déviant du mode de fonctionnement normal.
